# EUROPEAN PATENT APPLICATION

(11) **EP 3 406 318 A1**
(43) Date of publication of application: **28.11.2018**
(21) Application number: 16886389.2
(22) Date of filing: 24.08.2016
(51) Int. Cl.: B01D 53/04, B01D 53/50, B01D 53/56, B01D 53/62, B01D 53/82, B01J 20/06, B01J 20/34, F01K 17/04

(54) **CARBON DIOXIDE SEPARATION/RECOVERY DEVICE, COMBUSTION SYSTEM USING SAME, THERMAL POWER GENERATION SYSTEM USING SAME, AND METHOD FOR SEPARATING AND RECOVERING CARBON DIOXIDE**

(30) Priority: 21.01.2016 JP 2016009558
(71) Applicant: Hitachi Chemical Company, Ltd., Chiyoda-ku Tokyo 100-6606 (JP)
(72) Inventor: YOSHIKAWA, Kohei, Tokyo 100-8280 (JP); KANEEDA, Masato, Tokyo 100-8280 (JP); NAKAMURA, Hidehiro, Tokyo 100-6606 (JP); AOSHIMA, Masahiro, Tokyo 100-6606 (JP); SHIMAZAKI, Toshikatsu, Tokyo 100-6606 (JP)
(74) Representative: MERH-IP Matias Erny Reichl Hoffmann Patentanwälte PartG mbB
(86) International application number: PCT/JP2016/074629
(87) International publication number: WO 2017/126149

(57) **Abstract**

A carbon dioxide separation/recovery device for separating and recovering carbon dioxide from a gas to be processed and containing nitrogen oxides and carbon dioxide by using a carbon dioxide scavenger, including a carbon dioxide trapping unit having the carbon dioxide scavenger, in which the carbon dioxide trapping unit includes: a gas flow inlet which introduces the gas to be processed; a heating unit of heating a scavenger heating gas used upon desorption of carbon dioxide trapped by the carbon dioxide scavenger to a predetermined temperature; a cooling gas introduction port which introduces a scavenger cooling gas used when cooling the carbon dioxide scavenger; and a moisture mixing part which adds moisture to a gas for nitrogen oxide desorption used in desorption of nitrogen oxides from the carbon dioxide scavenger. Consequently, NOx accumulated to the carbon dioxide scavenger is desorbed, thereby capable of suppressing lowering in the performance of the carbon dioxide scavenger and reducing the running cost.

## Description

### Technical Field

The present invention relates to a carbon dioxide separation/recovery device, a combustion system using the same, a thermal power generation system using the same, and a method for separating and recovering carbon dioxide.

### Background Art

Global warming due to emission of greenhouse gases is a worldwide problem. The greenhouse gases include carbon dioxide (CO₂), methane (CH₄), chlorofluorocarbons (CFCs), etc. Among them, carbon dioxide gives a most significant effect and it is an urgent subject to constitute a system for separating and removing CO₂ from thermal power generation plants, iron and steel manufacturing plants, etc.

Further, CO₂ gives undesired effects also on human bodies. For example, when a gas containing CO₂ at a high concentration is inhaled, since this brings about health damages, CO₂ concentration has to be controlled in a closed space, for example, inside a room. In particular, in a circumstance where ventilation between external air and air inside the room is difficult as in a space station, a device for removing CO₂ is necessary. In addition, since CO₂ may possibly give undesired effects during production of foods and chemical products, a system for removing CO₂ has been required.

The countermeasure for the subjects includes, for example, a chemical absorption method, a physical absorption method, a membrane separation method, an adsorption separation method, a cryogenic separation method, etc. They include a separation method using a CO₂ scavenger. In the CO₂ removing system using a CO₂ scavenger, a CO₂-containing gas is introduced into a scavenger container filled with the CO₂ scavenger, thereby bringing the CO₂ scavenger and the gas into contact at an atmospheric pressure or under pressurization to trap and remove CO₂. Then, the trapped CO₂ is desorbed and released by heating the scavenger or depressurizing the inside of the scavenger container. The CO₂ scavenger after CO₂ desorption is used again for trapping and removing CO₂ by flowing the CO₂-containing gas after cooling or depressurization.

Combustion exhaust gases from thermal power generation plants, etc. contain nitrogen oxides (NOx) and sulfur oxides (SOx) and such gases may sometimes deteriorate the scavenger performance by adsorption or absorption to the scavenger. As a method for reducing the effect of NOx and SOx in the gases, NOx and SOx are generally removed by providing a device for removing NOx and SOx at the upstream of a reaction container.

Patent Literature 1 describes a device of separating and recovering CO₂ by subjecting CO₂ to membrane separation by using a zeolite film after removing impurities such as NOx and, further, to the amine absorptive method or the pressure adsorption method (PSA).

Patent Literature 2 describes a device filled with carbon dioxide scavenger of applying each of treatments of denitration, dust collection, and desulfurization to a boiler exhaust gas and, subsequently, trapping carbon dioxide. In this device, flow channel switching valves are disposed at the upstream and the downstream of a trapping tower for trapping carbon dioxide thereby capable of desorbing the trapped carbon dioxide with steam.

### Citation List

### Patent Literatures

Patent Literature 1: Japanese Patent Application Laid-Open No. 2012-236134
Patent Literature 2: Japanese Patent Application Laid-Open No. ,2013-059703

### Summary of Invention

### Problems to be resolved by the Invention

While Patent Literature 1 describes a device having a constitution of removing a separator degrading component such as NOx at the upstream of a zeolite film as a CO₂ separator, it does not describe means for recovering a separation performance when NOx flows through the separator and the separator performance is deteriorated.

While Patent Literature 2 describes that a denitration device is disposed at a preceding stage in the device described, the operation of desorbing NOx accumulated to the carbon dioxide scavenger is not described.

The present inventors have considered that the deterioration of the CO₂ scavenger can be suppressed and the running cost can be decreased by finding conditions of desorbing NOx in the CO₂ separator at a relatively low temperature.

The present invention intends to desorb NOx accumulated to the carbon dioxide scavenger, thereby suppressing lowering of the performance of the carbon dioxide scavenger and reducing the running cost.

### Means of Solving the Problems

The carbon dioxide separation/recovery device according to the present invention is a device for separating and recovering carbon dioxide from a gas to be processed containing nitrogen oxide and carbon dioxide by using a carbon dioxide scavenger. The device includes a carbon dioxide trapping unit having the carbon dioxide scavenger. In the device, the carbon dioxide trapping unit includes: a gas flow inlet which introduces the gas to be processed; a heating unit of heating a scavenger heating gas used upon desorption of carbon dioxide trapped by the carbon dioxide scavenger to a predetermined temperature; a cooling gas introduction port which introduces a scavenger cooling gas used when cooling the carbon dioxide scavenger; and a moisture mixing part which adds moisture to a gas for nitrogen oxide desorption used in desorption of nitrogen oxides from the carbon dioxide scavenger.

### Advantageous Effects of the Invention

According to the present invention, NOx accumulated to the carbon dioxide scavenger is desorbed, thereby capable of suppressing lowering in the performance of the carbon dioxide scavenger and reducing the running cost.

### Brief Description of Drawings

Figure 1 is a graph illustrating the difference in NOx trapping characteristics due to the presence or absence of flow of H₂O and CO₂.
Figure 2 is a graph illustrating that NOx is desorbed by simultaneously flowing H₂O and CO₂.
Figure 3A is a schematic configurational view illustrating an arrangement of a device for separating and recovering CO₂ from a combustion exhaust gas of a boiler in a thermal power generation station.
Figure 3B is a flow chart illustrating an operation procedure in a CO₂ separation/recovery device according to the present invention.
Figure 4 is a schematic view illustrating a configuration of suppressing NOx desorption in a CO₂ desorption step.
Figure 5A is a schematic view illustrating a configuration of flowing a low grade thermal medium through the gas-gas heat exchanger in Figure 4 to a heat transfer pipe in a high concentration H₂O generation device
Figure 5B is a schematic configurational view illustrating a high concentration H₂O generation device.
Figure 5C is a schematic configurational view illustrating an example of using a humidified combustion exhaust gas generated in the high concentration H₂O generation device for NOx desorption.
Figure 6 is a model view illustrating a phenomenon at a surface of ceria (CeO₂) as a sort of a scavenger.

### Description of Embodiments

The present invention relates to a technique of separating and recovering CO₂ contained in exhaust gases from a thermal power generation plant, etc. by using a scavenger and, in particular, it relates to a technique of reducing the effect of scavenger poisoning effect due to NOx.

Preferred embodiments of the present invention are to be described. The scope of the present invention is not restricted only to examples referred to below.

The present inventors have made an earnest study on means for desorbing NOx contained in a carbon dioxide scavenger (CO₂ scavenger) thereby recovering the scavenger performance and, as a result, have found that desorption of NOx is promoted by simultaneous flow of H₂O and CO₂ through the CO₂ scavenger containing a cerium oxide. It is considered that such a phenomenon is due to the followings. Due to flow of H₂O and CO₂, hydrogen carbonate salts are formed on the surface of oxides. Since hydrogen carbonate salts and NOx have points of bonding in common on the surface of oxides (adsorption points) and bonding between the NOx and the oxides is weakened by the formation of the hydrogen carbonate salts, thereby promoting desorption of NOx.

It is considered that, by utilizing the phenomenon, the NOx contained in the scavenger can be desorbed by using a CO₂ separation/recovery device of separating and recovering CO₂ from a NOx and CO₂-containing gas by using a solid CO₂ scavenger, in which the device includes a trapping container filled with a CO₂ scavenger, a device for flowing of a CO₂ containing gas to the trapping container, a device for flowing of an H₂O gas at high concentration to the trapping container, a device for flowing of CO₂ at high concentration to the trapping container, a device for discharging a gas removed with CO₂ from the trapping container, a device for discharging CO₂ from the trapping container, and a device of discharging a gas-containing NOx from the trapping container.

Any material may be used as the scavenger for trapping CO₂ and H₂O. They include, for example, metal oxides, composite oxides and hydroxides. As the CO₂ scavenger, a single kind of material may be used or plural kinds of materials may be combined. Further, one of them may be used as a support and the other of them may be supported thereon by a method, for example, of impregnation.

The metal oxides are preferably porous metal oxides and oxides or composite oxides containing at least one metal selected from Ce, rare earth metals other than Ce, and zirconium may be used more preferably. Particularly desired metal oxides as the scavenger are those including ceria (cerium oxide; CeO₂) as a skeleton to which at least one metal selected from rare earth metals other than Ce and zirconium is introduced, or those in which Ce atoms are partially substituted with such metals. The scavenger may have a structure in which crystals of plural kinds of metal oxides are mixed together.

When oxides in the combination described above are used, they can adsorb CO₂ also after contact with H₂O, and the CO₂ desorption temperature can be lowered. It is considered that since the surface of the oxides is reacted with H₂O to form hydroxyl groups (-OH) in the oxides, CO₂ can be adsorbed to the surface in the form of hydrogen carbonate salts (-CO₃H) due to the reaction between the functional group and CO₂.

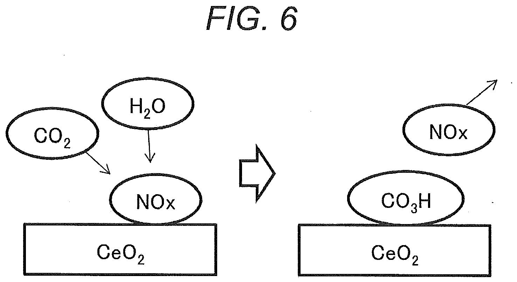

Figure 6 schematically illustrates the phenomenon on the surface of ceria (CeO₂) as a sort of desired scavengers.

In the drawing, NOx adsorbed on the CeO₂ surface (on the left of the drawing) is attacked by CO₂ and H₂O to desorb NOx and CO₂ and H₂O are adsorbed in the form of CO₃H (on the right of the drawing).

The method of synthesizing the scavenger includes preparation methods, for example, an impregnation method, a kneading method, a coprecipitation method, and a sol-gel method. For example, the scavenger may be obtained by adding a basic compound such as aqueous ammonia, Na hydroxide, or Ca hydroxide to a solution containing Ca nitrate thereby adjusting pH to 7 to 10, followed by precipitation. In a case where oxides are formed by precipitation, they may be used as such, or may be oxidized further by sintering.

In addition, silica (SiO₂), alumina (AlO₃), zeolite, etc. may also be used as metal oxides and metal composite oxides. Further, for increasing the specific surface area, improving the heat resistance, decreasing the amount of metal to be used, etc., oxides or mixed oxides containing at least one metal selected from Ce, rare earth metals and zirconium may be supported on silica, alumina, or zeolite.

CO₂ may be recovered using the CO₂
separation/recovery device, for example, by using the following procedures.

In the CO₂ recovery step, three steps including a CO₂ adsorption step, a CO₂ desorption step, and a scavenger cooling step are repeated as one cycle.

In the CO₂ adsorption step, a NOx and CO₂-containing gas is flowed in the scavenger container to trap CO₂ in the gas. Then, the CO₂-removed gas is discharged from the scavenger container. In the CO₂ desorption step, the scavenger is heated by using heating means and CO₂ which is desorbed due to the difference of temperature from that upon adsorption is discharged from the scavenger container. In the scavenger cooling step, the scavenger is cooled by using cooling means and, subsequently, the CO₂ adsorption step is started again.

Further, the NOx desorption step is applied in accordance with the lowering of the CO₂ trapping performance of the CO₂ scavenger caused by trapping NOx. In the NOx desorption step, H₂O at a high concentration and CO₂ at a high concentration are flowed to the scavenger container and the desorbed NOx is discharged from the scavenger container.

In the CO₂ trapping step, the temperature of the scavenger is preferably low for promoting CO₂ trapping. The temperature is preferably 100°C or lower and, more preferably, 50°C or lower.

The heating means include heating means using heat transfer, heating means using heat transfer between a gas and a scavenger, heater due to electric resistance, and heating means using electromagnetic means such as dielectric heating, or induction heating.

The heating means using heat transfer includes, for example, providing a heat transfer pipe inside the scavenger container or utilizing the wall surface of the scavenger container as a heat transfer surface. Thermal medium utilized for the heat transfer pipe or the heat transfer surface includes one or more of gas and liquid. Examples of the thermal medium include high temperature combustion exhaust gases from a boiler of a thermal power generation station, extracted steam from steam turbines, high temperature exhaust gases from plants.

Heating means using heat transfer between a gas and a scavenger includes, for example, such means of flowing a heating gas at a high temperature to the scavenger container, etc. The gas to be flowed includes, for example, high temperature combustion exhaust gases from a boiler of a thermal generation power station, extracted steam from a steam turbine, high temperature exhaust gases from a plant, etc. shown above as examples of the thermal medium.

In the heating step, for promoting CO₂ desorption, the scavenger temperature is preferably 100°C or higher and, more preferably, 150°C or higher.

The cooling means include cooling means using heat transfer, or cooling means using heat transfer between the gas and the scavenger.

The cooling means using heat transfer include, for example, those of providing a heat transfer pipe inside the scavenger container or utilizing the wall surface of the scavenger container as a heat transfer surface. Such heat transfer equipment may be used in common as heating means by changing thermal medium or cooling medium to be flowed. The coolant to be flowed includes, for example, atmospheric air or cooling water from a river and an ocean.

Cooling means using heat transfer between the gas and the scavenger includes, for example, means of flowing a cooling gas at a low temperature to the scavenger container. The cooling gas includes, for example, atmospheric air, a CO₂-removed gas, etc. and CO₂-removed gas discharged in the adsorption step.

H₂O at a high concentration and a CO₂-containing gas at a high concentration flow in the NOx desorption step includes, for example, plant exhaust gases and extracted steam from steam turbines and a gas mixture thereof. Since H₂O partial pressure in the NOx desorption can be at 1 atm or lower, H₂O at high pressure and high temperature is not always necessary.

For purifying H₂O at a high concentration, H₂O concentration may be increased by flowing a gas containing CO₂ at a high concentration to heated water, thereby increasing the H₂O concentration. The H₂O partial pressure may be 1 atm or lower. Accordingly, the water temperature may be 100°C or lower. On the other hand, since a heating gas used for CO₂ desorption has to be at 100°C or higher, water may be heated by using a thermal medium after used for increasing the temperature of the heating gas and lowered for the temperature.

In the heating step for desorbing CO₂, when H₂O and CO₂ are flowed simultaneously, NOx adsorbed in the adsorption step may possibly be desorbed and intrude into the recovered CO₂. For suppressing such undesired effect, it is considered effective to lower the H₂O concentration in the heating gas. The method includes, for example, flowing a heating gas to the dehumidifying material to lower the H₂O concentration, flowing the heating gas cooling equipment such as a condenser to decrease H₂O by condensation.

For coping with increase in the gas heating load caused by gas cooling in the condenser, a heat exchanger may be located to conduct gas heat exchange between the upstream and the downstream of the condenser.

It is considered that H₂O formed in the desorption step is H₂O trapped in the adsorption step or the cooling step. Accordingly, the H₂O concentration may be previously lowered in such steps.

In order to judge the requirement of the NOx desorption step, it is necessary to check whether the performance of the CO₂ scavenger has been deteriorated or not due to the flow of NOx. The method of judging deterioration of the CO₂ scavenger performance includes a method of measuring increase of CO₂ gas concentration at an outlet, measuring heat generation caused by trapping CO₂ upon flowing of CO₂-containing gas, etc. In this case, a CO₂ gas concentration sensor, a temperature sensor, etc. are attached to a trapping container or pipelines etc.

Referring to the deterioration of the performance of the CO₂ scavenger, SOx is also attributable to the deterioration of the scavenger performance in addition to that of NOx. In order to judge the deterioration of NOx and SOx, equipment for measuring the concentrations of NOx and SOx (NOx gas concentration sensor, SOx gas concentration sensor) may be introduced to the outlet of the trapping container. Further, an adsorption/desorption mechanism of NOx and SOx may also be utilized. NOx trapped on the CO₂ scavenger is desorbed by flowing the H₂O and CO₂-containing gas but SOx is not desorbed under this condition. Accordingly, when the CO₂ scavenger performance is not recovered after execution of the NOx desorption step, it can be regarded as deterioration caused by trapping SOx.

Further, when SOx is caused to flow in the CO₂ trapping step, since SOx is not desorbed, the degree of deterioration due to SOx in the CO₂ scavenger is higher at the upstream in the trapping container. On the other hand, when NOx, H₂O, and CO₂ are flowed, since NOx repeats trap and desorption, deterioration due to NOx tends to occur uniformly to the CO₂ scavenger in the trapping container compared with deterioration due to SOx. Accordingly, lowering of the temperature elevation of the CO₂ scavenger in the trapping container upon CO₂ trapping is remarkable at the upstream in a case of deterioration due to SOx and it is considered that NOx deterioration occurs both at the upstream and the downstream. In order to evaluate this phenomenon, movable or immovable temperature measuring equipment (temperature sensors) may be provided in plurality in the trapping container to measure the temperature of the CO₂ scavenger and evaluate deterioration.

The CO₂ adsorption/separation method includes, for example, a fixed bed system of using a scavenger in fixture and a fluidized bed system of using a scavenger in circulation and either of the methods may be used.

Examples of the present invention are to be described in details.

### Example 1

### (NOx adsorption test)

NOx adsorption characteristics were evaluated by the following methods in a case where one or both of H₂O and CO₂ are contained together with NOx by the following method. As the CO₂ scavenger, CeO₂ at a high specific surface area manufactured by Daiichi Kigenso Kagaku Kogyo Co., Ltd. was used.

The CO₂ scavenger was pelleted at 200 kgf by a press using a dye of 40 mm diameter, and then seized to a granular shape of 0.5 to 1.0 mm using a sieve after pulverization. Subsequently, 20.0 ml of granules were measured by using a measuring cylinder and they were fixed in a stainless steel tubular reactor. Impurities and gases adsorbed to the scavenger were removed by elevating a temperature to 200°C and keeping for one hour using an electric furnace while flowing an N₂ gas at 2.0 L/min. Subsequently, the temperature of the CO₂ scavenger was cooled to 50°C and the outlet NOx concentration was measured under four conditions of different compositions of flowing gases while maintaining the specimen temperature at 50°C by the electric furnace.

Table 1 shows gas compositions and outlet NOx concentrations after 2000 seconds for each of the conditions.

In the condition (1), none of H₂O and CO₂ is added to nitrogen monoxide (NO).

In the condition (2), H₂O was added to nitrogen monoxide (NO).

In the condition (3), CO₂ was added to nitrogen monoxide (NO).

In the condition (4), both of H₂O and CO₂ were added to nitrogen monoxide (NO).

### [Table 1]

**Table 1: Gas composition for each condition**

| Condition | Content | Gas composition | | | | | Outlet NOx concentration after 2000 sec (ppm) |
|---|---|---|---|---|---|---|---|
| | | N₂ (%) | CO₂ (%) | O₂ (%) | H₂O (%) | NO (ppm) | |
| (1) | NO flow | 95 | 0 | 5 | 0 | 150 | 0 |
| (2) | NO+H₂O flow | 83 | 0 | 5 | 12 | 150 | 1 |
| (3) | NOx+CO₂ flow | 83 | 12 | 5 | 0 | 150 | 5 |
| (4) | NOx+H₂O+CO₂ flow | 71 | 12 | 5 | 12 | 150 | 90 |

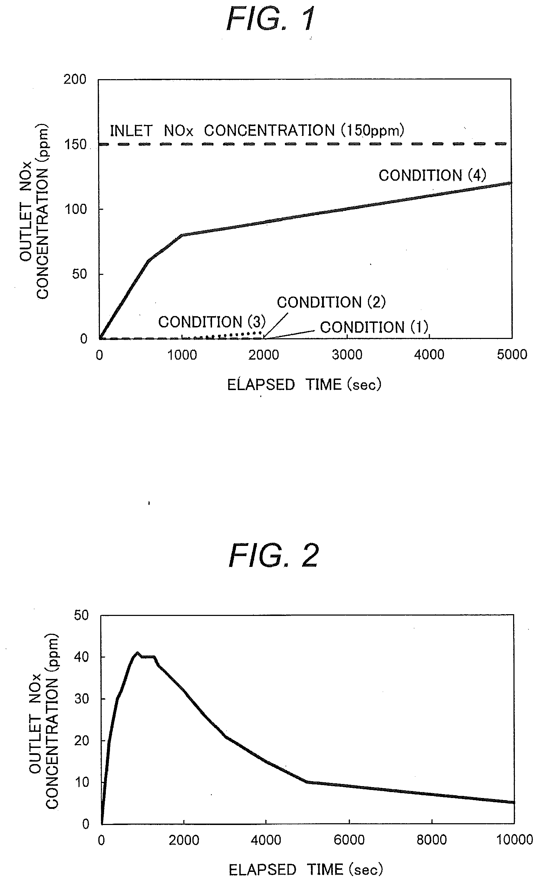

Figure 1 illustrates change with time of the NOx concentration at the outlet under each of conditions.

In view of the graph, it can be seen that the NOx concentrations at the outlet were low under conditions (1) to (3), whereas NOx concentration at the outlet was extremely high under the condition (4).

As shown in Table 1, when NOx concentration 2000 seconds after gas flow were compared in this experiment, NOx concentration at the outlet was increased remarkably in a case of flowing H₂O and CO₂ simultaneously.

In view of the result, it was found that the effect of suppressing NOx adsorption or absorption to the CO₂ scavenger was obtained in a case of adding both H₂O and CO₂,

### (NOx desorption test)

After flowing a gas for 5000 seconds under the condition (4) in Table 1, a gas not containing NO but containing H₂O but containing H₂O and CO₂ was flowed in a state of keeping a sample temperature to 50°C, and it was examined whether NOx was desorbed or not.

Table 2 shows a gas composition used herein not containing NO but containing H₂O and CO₂.

### [Table 2]

**Table 2: Gas composition for NOx desorption test**

| Outline | Gas composition | | | | |
|---|---|---|---|---|---|
| | N₂ (%) | CO₂ (%) | O₂ (%) | H₂O (%) | NO (ppm) |
| NOx desorption test | 71 | 12 | 5 | 12 | 0 |

Figure 2 shows the change with time NOx concentration at the outlet in a case of flowing a gas not containing NO but containing H₂O and CO₂.

As illustrated in the drawing, the NOx concentration at the outlet reached maximum about 1000 seconds after starting the flow of a gas not containing NO but containing H₂O and CO₂ and then decreased gradually. This shows that NOx was desorbed from the CO₂ scavenger by H₂O and CO₂ contained in the gas.

Accordingly, it has been found from this test that the gas containing H₂O and CO₂ have an effect of desorbing NOx from the CO₂ scavenger.

### Example 2

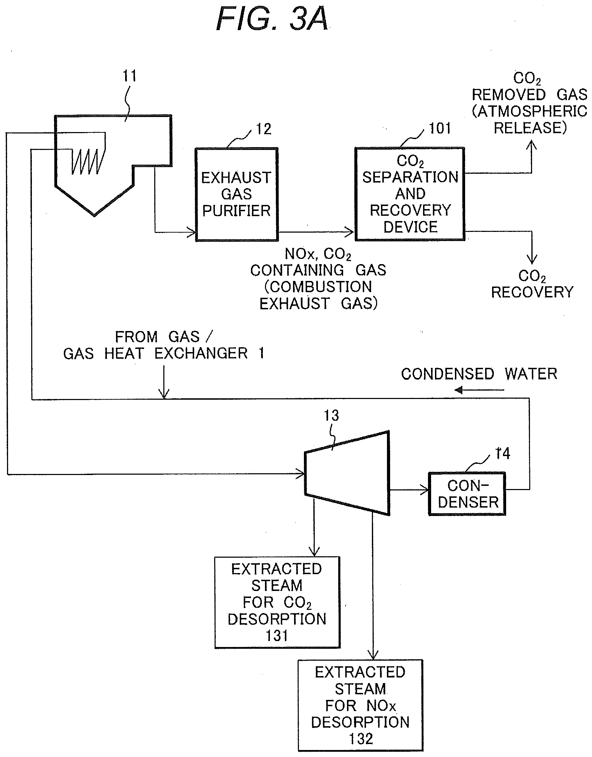

Figure 3A illustrates a configuration of a device of separating and recovering CO₂ from a combustion exhaust gas of a boiler in a thermal power generation station by utilizing characteristics of the CO₂ scavenger shown in Example 1. Usually, the combustion exhaust gas contains nitrogen oxides and carbon dioxide. The combustion exhaust gas is also referred to as a gas to be processed.

The drawing shows, in addition to CO₂ separation/recovery device 101, a boiler 11 of a thermal power generation station, an exhaust gas purifying device 12, a low pressure turbine 13, and a condenser 14. A trapping container of the CO₂ separation/recovery device 101 contains a CO₂ scavenger. They constitute a CO₂ trapping unit.

The combustion exhaust gas discharged from the boiler 11 is subjected to processing such as denitration, desulfurization, dust removal, etc. in an exhaust gas purifying device 12, and then delivered to the CO₂ separation/recovery device 101. In the CO₂ separation/recovery device 101, CO₂ is removed and then the CO₂-removed gas is released to the atmosphere.

The combustion exhaust gas introduced to the CO₂ separation/recovery device 101 is a gas in which the NOx content is reduced by denitration. However, NOx is not completely removed from the combustion exhaust gas but the combustion exhaust gas is a gas containing NOx and CO₂ (NOx, CO₂-containing gas). Accordingly, the CO₂ scavenger in the CO₂ separation/recovery device 101 is gradually poisoned by NOx.

There are two systems of taking out steam from a low pressure turbine 13 (steam turbine) in which steam 131 at the upstream (high pressure and high temperature side) of the steam turbine (extracted steam for CO₂ desorption) are used for heat exchange with a heating gas in the CO₂ desorption step, and steam 132 (extracted steam for NOx desorption) at the downstream (low pressure and low temperature side) of the steam turbine is used for NOx desorption step.

The CO₂ separation/recovery device 101, the boiler 11, and the exhaust gas purification device 12 shown in the drawing are configurational elements of the combustion system.

Further, the CO₂ separation/recovery device 101, the boiler 11, the exhaust gas purification device 12, the low pressure turbine 13, and the condenser 14 shown in the drawing are configurational elements of a thermal power generation system. The thermal power generation system may also have a high pressure turbine in addition to the low pressure turbine 13. Further, a system containing one of steam turbines such as a low pressure turbine 13 or a high pressure turbine is also a thermal power generation system.

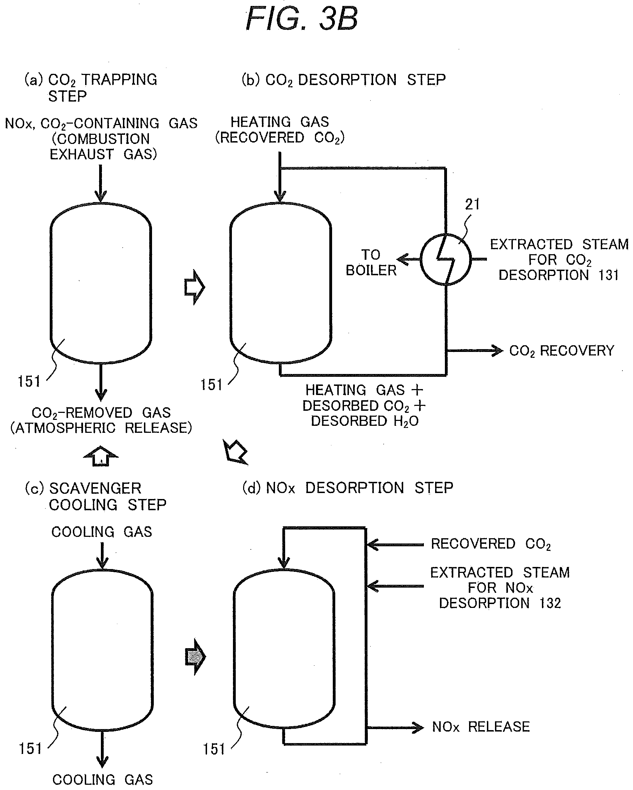

Figure 3B illustrates operation procedures in the CO₂ separation/recovery device of the present invention.

In the drawing, are shown (a) a CO₂ trapping step, (b) a CO₂ desorption step, (c) a scavenger cooling step and (d) an NOx desorption step. Usually, steps are repeated in the order of (a) → (b) → (c) → (a).... Then, when the CO₂ trapping performance of the CO₂ scavenger is deteriorated due to NOx trapping, NOx desorption step (d) is executed.

In the trapping container 151 shown in each of the steps, a CO₂ scavenger including Ce oxide is filled. The carbon dioxide trapping unit including the trapping container 151 filled with the CO₂ scavenger is a main configurational element of the CO₂ separation/recovery device 101. The gas flowed to the trapping container 151 is adapted to be switched by on-off of valves. In each of the steps, pipelines and equipment in a state without gas flow, that is, with relevant valves being closed are not shown.

In the CO₂ trapping step (a), a combustion exhaust gas which is a gas containing NOx and CO₂ (NOx, CO₂-containing gas) is flowed to the trapping container 151 filled with the CO₂ scavenger. The CO₂-removed gas discharged from the trapping container 151 is released to the atmosphere. A site of introducing the combustion exhaust gas (gas to be processed) to the trapping container 151 is referred to as "gas flow inlet".

In the CO₂ desorption step (b), CO₂ in the scavenger is desorbed and recovered by heating the scavenger. In the CO₂ desorption step, the recovered CO₂ is partially drawn and utilized as a heating gas. The heating gas flowed to the trapping container 151 is discharged from the trapping container 151 and then partially drawn as the recovered CO₂. Subsequently, the recovered CO₂ is heated by heat exchange with the extracted steam 131 from the steam turbine in a gas/gas heat exchanger 21 and then flowed again as the heating gas to the trapping container 151. The extracted steam 131 are subjected to the heat exchange and then refluxed to the boiler and heated again. The gas/gas heat exchanger 21 is an example of the heating unit for heating the scavenger heating gas to a predetermined temperature. Further, the scavenger heating gas is adapted to be introduced to the trapping container 151 so as to be in direct contact with the carbon dioxide scavenger.

In the scavenger cooling step (c), the scavenger is cooled by flowing atmospheric air. Here, a site of introducing the scavenger cooling gas used upon cooling of the carbon dioxide scavenger to the trapping container 151 is referred to as "cooling gas introduction port".

As described above, the process is usually repeated on the order of (a) → (b) → (c) → (a) ···. When the CO₂ trapping performance of the CO₂ scavenger is deteriorated due to trapping of NOx, the NOx desorption step (d) is executed.

In the NOx desorption step (d), a portion of the recovered CO₂ and the extracted steam 132 from the steam turbine are flowed in the trapping container 151 to desorb NOx from the CO₂ scavenger. The gas discharged from the trapping container 151 is partially drawn and flowed again to the trapping container 151. The desorbed NOx is desirably disposed by catalytic non-toxification, effective utilization to fertilizer, etc. without being released to the atmosphere. A gas introduced to the trapping container 151 upon desorption of the nitrogen oxides from the carbon dioxide scavenger is referred to as "gas for nitrogen oxide desorption". Further, a part in which the steam 132 is added to the gas for nitrogen oxide desorption is referred to as "moisture mixing part".

By operating the CO₂ separation/recovery device as in this example, it is possible to separate and recover CO₂, and suppress deterioration of the performance of the CO₂ scavenger caused by NOx trapping. In other words, NOx poisoning in the CO₂ scavenger can be decreased.

A plurality of the trapping containers 151 may be provided and peripheral equipment such as gas/gas exchangers 21 and switching valves, etc. that function in the course of steps (a) to (d) may be attached to respective trapping containers 151. Such a configuration enables the steps (a) to (d) to be performed simultaneously in parallel.

### Example 3

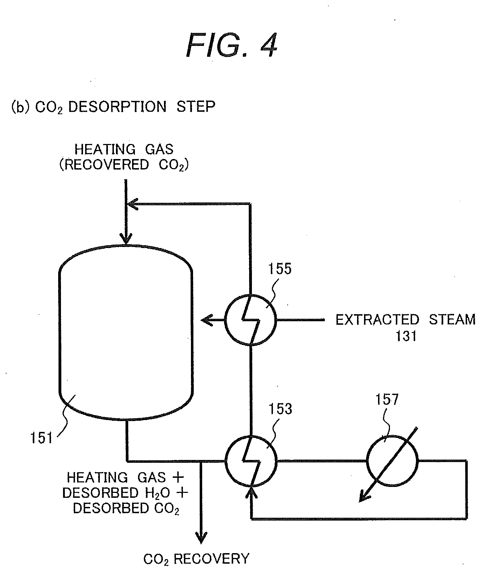

Figure 4 illustrates a configuration of suppressing NOx desorption in the CO₂ desorption step in the CO₂ separation/recovery device according to the present invention.

Other constitutions those that of the CO₂ desorption step are identical with the constitutions illustrated in Example 2.

In this example, recovered CO₂ is flowed as a heating gas to the trapping container 151. After flowing the gas discharged from the trapping container 151 (gas mixture of heating gas, desorbed CO₂ and desorbed H₂O) to the gas/gas heat exchanger 153, the gas is flowed to the condenser 157 to condensate and remove H₂O. Subsequently, the gas discharged from the condenser 157 is flowed to the gas/gas heat exchanger 153, and the temperature is elevated by heat exchange. Subsequently, the gas is flowed to the gas/gas heat exchanger 155 and further subjected to heat exchange with extracted steam 131 from the steam turbine. In this case, the condenser 157 is an example of a dehumidifying part. The source for generating steam is not limited to the steam turbine but solar heat or exhaust heat may also be utilized.

This configuration reduces the heating load in the gas/gas heat exchanger 155 and NOx desorption in the CO₂ desorption step is suppressed by decreasing the concentration of H₂O in the gas, thereby capable of improving the purity of the recovered CO₂.

### Example 4

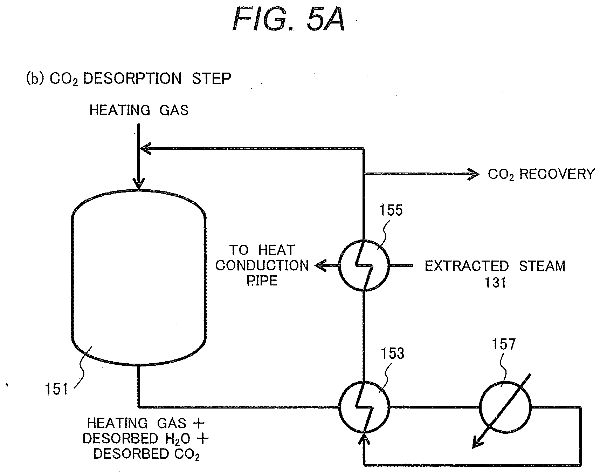

Figure 5A to Figure 5C illustrate other configurational examples of humidifying the combustion exhaust gas.

Figure 5A illustrates a configuration of delivering extracted steam 131 (which may be condensed to liquid water) flowing through the gas/gas heat exchanger 155 in Figure 4 to a heat transfer tube of a high concentration H₂O generation device to be described later to further recover the heat from the extracted steam 131.

The configuration illustrated in Figure 5A is identical with that of Example 3 shown in Figure 4 except for flowing steam after passing the gas/gas heat exchanger 155 to a heat transfer tube in the high concentration H₂O generation device.

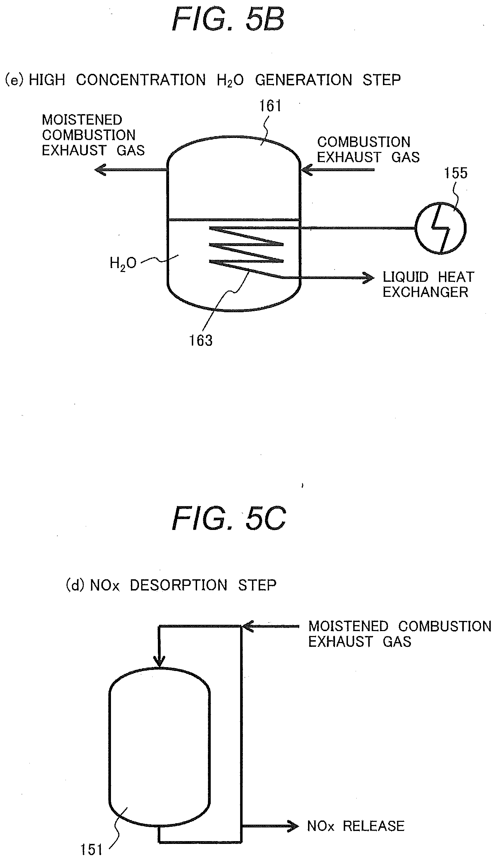

Figure 5B illustrates a high concentration H₂O generation device (high concentration H₂O generation step (e)).

In the drawing, the high concentration H₂O generation device 161 incorporates a heat transfer tube 163. Steam or water passing through the gas/gas heat exchanger 155 is introduced to the heat transfer tube 163. Water stored inside the high concentration H₂O generation device 161 is heated by the heat of the steam or water and steam is supplied to the combustion exhaust gas to form a humidified combustion exchange gas. The heat transfer tube 163 is connected with the gas/gas heat exchanger 155 illustrated in Figure 5A. The high concentration H₂O generation device 161 is an example of the moisture mixing part used in the NOx desorption step (d).

Figure 5C illustrates an NOx desorption step utilizing a humidified combustion exhaust gas.

In the drawing, a humidified combustion exhaust gas is mixed with the CO₂-containing gas supplied to the trapping container 151 upon NOx desorption step to increase the H₂O ratio, thereby promoting desorption of NOx.

In this example, consumption heat calorie can be decreased by using the extracted steam after heat exchange which is a relatively low grade heat source as the thermal medium for the high concentration H₂O generation device.

In this example, it is effective to provide trapping containers 151 in plurality and perform at least steps (b) and (d) simultaneously in parallel. Accompanying the steps, the step (e) is executed simultaneously.

### List of Reference Signs

11: boiler,
13: exhaust gas purifying device,
12: low pressure turbine,
14: condenser,
21, 153, 155: gas/gas heat exchanger,
101: CO₂ separation/recovery device,
131, 132: steam,
151: trapping container,
157: condenser,
161: high concentration H₂O generation device,
163: heat transfer tube.

## Claims

1. A carbon dioxide separation/recovery device for separating and recovering carbon dioxide from a gas to be processed containing nitrogen oxide and carbon dioxide by using a carbon dioxide scavenger, comprising a carbon dioxide trapping unit having the carbon dioxide scavenger,
wherein the carbon dioxide trapping unit includes:
a gas flow inlet which introduces the gas to be processed;
a heating unit of heating a scavenger heating gas used upon desorption of carbon dioxide trapped by the carbon dioxide scavenger to a predetermined temperature;
a cooling gas introduction port which introduces a scavenger cooling gas used when cooling the carbon dioxide scavenger; and
a moisture mixing part which adds moisture to a gas for nitrogen oxide desorption used in desorption of nitrogen oxides from the carbon dioxide scavenger.

2. The carbon dioxide separation/recovery device according to claim 1,
wherein the carbon dioxide scavenger contains a cerium oxide.

3. The carbon dioxide separation/recovery device according to claim 1 or 2,
wherein the scavenger heating gas is at a temperature higher than that of the carbon dioxide scavenger and introduced into the carbon dioxide trapping unit so as to be in direct contact with the carbon dioxide scavenger.

4. The carbon dioxide separation/recovery device according to claims 3,
comprising a plurality of the carbon dioxide trapping units.

5. The carbon dioxide separation/recovery device according to claim 4,
wherein the heating unit is a heat exchanger of performing heat exchange between the scavenger heating gas and a fluid as another thermal medium, and
the thermal medium is adapted to heat water after flowing in the heat exchanger to generate steam to be added to the nitrogen oxide absorption gas.

6. The carbon dioxide separation/recovery device according to any one of claims 3 to 5,
comprising a dehumidifying part which removes steam contained in the scavenger heating gas.

7. The carbon dioxide separation/recovery device according to claim 6,
wherein the dehumidifying part is a condenser which cools the scavenger heating gas thereby liquefying and removing steam.

8. The carbon dioxide separation/recovery device according to claim 7,
comprising a gas/gas heat exchanger which performs heat exchange between the heating gas at the upstream of the condenser and the heating gas at the downstream of the condenser.

9. The carbon dioxide separation/recovery device according to any one of claims 1 to 8,
further comprising a sensor which detects lowering of a carbon dioxide trapping amount caused by accumulation of nitrogen oxides to the carbon dioxide scavenger.

10. The carbon dioxide separation/recovery device according to claim 9,
wherein the sensor measures the concentration of carbon dioxide at the gas flow outlet of a container containing the carbon dioxide scavenger.

11. The carbon dioxide separation/recovery device according to claim 9,
wherein the sensor measures the temperature of the carbon dioxide scavenger.

12. The carbon dioxide separation/recovery device according to claim 9,
wherein the sensor measures the concentration of nitrogen oxides at the gas flow outlet of the container containing the carbon dioxide scavenger.

13. A combustion system comprising:
the carbon dioxide separation/recovery device according to any one of claims 1 to 12; and
a boiler.

14. The combustion system according to claims 13 further comprising an exhaust gas purifying device.

15. A thermal power generation system comprising:
the carbon dioxide separation/recovery device according to any one of claims 1 to 12;
a boiler;
an exhaust gas purification device; and
a steam turbine.

16. A method of separating and recovering carbon dioxide from a gas to be processed and containing nitrogen oxides and carbon dioxide by using a carbon dioxide scavenger, the method comprising:
a carbon dioxide trapping step of bringing the gas to be processed into contact with the carbon dioxide scavenger, thereby trapping carbon dioxide;
a carbon dioxide desorption step of heating the carbon dioxide scavenger, thereby desorbing carbon dioxide trapped to the carbon dioxide scavenger;
a scavenger cooling step of cooling the carbon dioxide scavenger; and
a nitrogen oxide desorption step of supplying moisture together with carbon dioxide to the carbon dioxide scavenger thereby desorbing nitrogen oxides from the carbon dioxide scavenger.

17. The method of separating and recovering carbon dioxide according to claim 16,
wherein the carbon dioxide trapping step, the carbon dioxide desorption step, and the scavenger cooling step are repeated in this order, and the nitrogen oxide desorption step is executed optionally.

18. The method of separating and recovering carbon dioxide according to claim 17,
wherein the nitrogen oxide desorption step is executed when the trapping amount of carbon dioxide is lowered to or less than a predetermined value by accumulation of nitrogen oxides to the carbon dioxide scavenger.

19. The method of separating and recovering carbon dioxide according to any one of claims 16 to 18,
wherein the carbon dioxide desorption step and the nitrogen oxide desorption step are performed simultaneously in parallel.
